(19) Europäisches Patentamt
European Patent Office
Office européen des brevets

(11) **EP 1 491 856 B1**

(12) **FASCICULE DE BREVET EUROPEEN**

(45) Date de publication et mention de la délivrance du brevet:
**19.10.2005 Bulletin 2005/42**

(51) Int Cl.⁷: **G01C 19/56**

(21) Numéro de dépôt: **04102828.3**

(22) Date de dépôt: **21.06.2004**

(54) **Gyromètre à masse vibrante**

Schwingungsgyroskop

Vibrating mass gyroscope

(84) Etats contractants désignés:
**DE FR GB**

(30) Priorité: **27.06.2003 FR 0307827**

(43) Date de publication de la demande:
**29.12.2004 Bulletin 2004/53**

(73) Titulaire: **Thales**
**92200 Neuilly Sur Seine (FR)**

(72) Inventeurs:
- **LEHUREAU, Jean-Claude**
  **94117 ARCUEIL Cedex (FR)**
- **CHAUMET, Bernard**
  **94117 ARCUEIL Cedex (FR)**
- **LEFORT, Pierre-Olivier**
  **94117 ARCUEIL Cedex (FR)**

(74) Mandataire: **Beylot, Jacques et al**
**THALES Intellectual Property**
**31-33 avenue Aristide Briand**
**94117 Arcueil Cédex (FR)**

(56) Documents cités:
EP-A- 0 971 208    EP-A- 1 014 037
WO-A-01/20257      US-A- 6 094 985

- AYAZI F ET AL: "Design and fabrication of high-performance polysilicon vibrating ring gyroscope" MICRO ELECTRO MECHANICAL SYSTEMS, 1998. MEMS 98. PROCEEDINGS., THE ELEVENTH ANNUAL INTERNATIONAL WORKSHOP ON HEIDELBERG, GERMANY 25-29 JAN. 1998, NEW YORK, NY, USA,IEEE, US, 25 janvier 1998 (1998-01-25), pages 621-626, XP010270212 ISBN: 0-7803-4412-X
- PATENT ABSTRACTS OF JAPAN vol. 1996, no. 06, 28 juin 1996 (1996-06-28) & JP 8 054242 A (MURATA MFG CO LTD), 27 février 1996 (1996-02-27)

**Description**

La présente invention concerne la mesure de la vitesse de rotation d'un mobile au moyen de capteurs placés à bord du mobile. Les capteurs permettant de faire une telle mesure dits capteurs gyrométriques peuvent mettre en oeuvre différents principes physiques. On en distingue principalement trois grandes classes : celle des gyrolasers, celle des gyromètres à fibres optiques et celle des gyromètres à masse vibrante.

La grande majorité des gyromètres à masse vibrante actuellement connus procèdent par excitation d'un mode de vibration de la masse vibrante dans une direction et détection des vibrations induites dans une direction orthogonale par la force de Coriolis. Ils se présentent sous de multiples formes de plus en plus souvent conçues en vue d'une réalisation micro-électro-mécanique dite MEMs (acronyme de l'expression anglo-saxonne :"MicroElectroMechanical system"). Ceux sont les capteurs de vitesse de rotation les moins coûteux mais ils souffrent d'un manque de stabilité à moyen et long termes inhérent à leur principe de fonctionnement, interdisant leurs utilisations, sans recalages fréquents, dans des applications de navigation à moyen et long terme.

Le document EP-A-0 971 208 décrit un gyromètre avec une masse vibrante animée d'un mouvement circulaire par deux moteurs linéaires qui produisent deux oscillations ayant des phases opposées. Un gyromètre comprenant une masse tournante annulaire est connu du document US-A-6 094 985. Le document WO0-A-01 202 57 décrit un gyromètre avec une masse circulaire utilisant un décalage de phases d'un noeud de vibration.

La présente invention a pour but des gyromètres à masse vibrante à stabilité améliorée se prêtant à une réalisation micro-électro-mécanique.

Elle a pour objet un gyromètre à masse vibrante comportant un support, une masse, des suspensions élastiques fixant la masse au support, et un ou plusieurs moteurs de déplacement entretenant un mouvement vibratoire de la masse suspendue, des capteurs de position des éléments en mouvement de la masse suspendue et un dispositif de traitement extrayant une mesure de vitesse d'oscillation circulaire à partir des signaux délivrés par les capteurs de position, remarquable en ce que :

- le système mécanique constitué par la masse et les suspensions élastiques la fixant au support est configuré pour présenter au moins deux modes propres orthogonaux d'oscillation dont la combinaison induit un mouvement circulaire droit ou gauche d'une partie au moins de la masse suspendue,
- le/les moteurs de déplacement sont configurés pour exciter les deux modes d'oscillation orthogonaux de manière à provoquer alternativement des mouvements circulaires droit et gauche d'une partie au moins de la masse suspendue, et
- le dispositif de traitement mesure la fréquence et/ou la phase de chaque mouvement circulaire droit ou gauche à partir des signaux fournis par les capteurs de position et extrait une mesure de vitesse de rotation de la différence des mesures de fréquences et/ou de phase entre mouvement circulaire droit et mouvement circulaire gauche.

Avantageusement, la masse vibrante est une masse déformable constituant avec les suspensions élastiques, un système mécanique présentant au moins deux modes propres dont la combinaison induit une composante majoritaire de déplacement circulaire droit ou gauche des éléments de la masse déformable.

Avantageusement, les deux modes propres orthogonaux d'oscillation ont un léger décalage de fréquence provoquant un battement induisant une évolution spontanée d'un mode de rotation droit en mode de rotation gauche et réciproquement, en passant par des étapes intermédiaires à mouvement linéaire.

Avantageusement, le gyromètre à masse vibrante comporte un asservissement utilisant les signaux des capteurs de position et du dispositif de traitement pour contrôler le/les moteurs de déplacement de manière à maintenir constantes et égales les amplitudes des mouvements circulaires droit et gauche.

Avantageusement, l'asservissement délivre aux moteurs de déplacement des impulsions d'excitations pendant les étapes intermédiaires à mouvement linéaire de la masse suspendue ou d'une partie de celle-ci, au moment des passages de la masse suspendue ou d'une partie de celle-ci par le point milieu de sa trajectoire linéaire.

Avantageusement, le dispositif de traitement comporte un circuit de détection de quadratures avance et retard entre les composantes des signaux des capteurs de position relatives à l'un des modes propres d'oscillations et les composantes des signaux des capteurs de position relatives à l'autre mode propre orthogonal d'oscillation.

Avantageusement, les moteurs de déplacement et capteurs de position sont constitués d'un même dispositif jouant alternativement les deux rôles.

Avantageusement, les moteurs de déplacement influent individuellement sur l'un des modes propres orthogonaux d'oscillation et pas sur l'autre et sont répartis en deux groupes d'égales importances, les moteurs de déplacement d'un groupe agissant sur l'un des modes propres d'oscillation et ceux de l'autre groupe agissant sur l'autre mode propre d'oscillation.

Avantageusement, les moteurs de déplacement et capteurs de position sont constitués d'un même dispositif jouant alternativement les rôles de moteur de déplacement et de capteur de position, agencés pour influer sur l'un des modes orthogonaux et pas sur l'autre, et répartis en deux groupes selon qu'ils agissent sur l'un ou l'autre des deux modes orthogonaux d'oscillation.

Avantageusement, la masse suspendue est fixée au support par un ensemble de suspensions élastiques lui permettant d'osciller dans un plan avec des modes propres de fréquences différentes selon deux directions orthogonales du plan.

Avantageusement, la masse suspendue est constituée de deux masses vibrantes associées de telle manière que leur barycentre reste fixe.

Avantageusement, la masse suspendue est constituée de deux masses vibrantes à barycentre fixe obtenues par des associations de poutres et de points de flexion.

Avantageusement, la masse suspendue est un anneau avec deux modes propres orthogonaux de flexion orientés selon des axes écartés de 45°.

Avantageusement, la masse suspendue est un cylindre avec deux modes propres orthogonaux de flexion orientés selon des axes écartés de 45°.

Avantageusement, la masse suspendue est un bol dont le bord présente deux modes propres orthogonaux de flexion orientés selon des axes écartés de 45°.

Avantageusement, les moteurs de déplacement sont des dispositifs piézo-électrique.

Avantageusement, les capteurs de position sont des dispositifs pièzo-électriques.

Avantageusement, les moteurs de déplacement sont des dispositifs électrostatiques.

Avantageusement, les capteurs de position sont des dispositifs électrostatiques.

D'autres avantages et caractéristiques de l'invention ressortiront de la description ci-après de modes de réalisation donnés à titre d'exemple. Cette description sera faite en regard du dessin dans lequel :

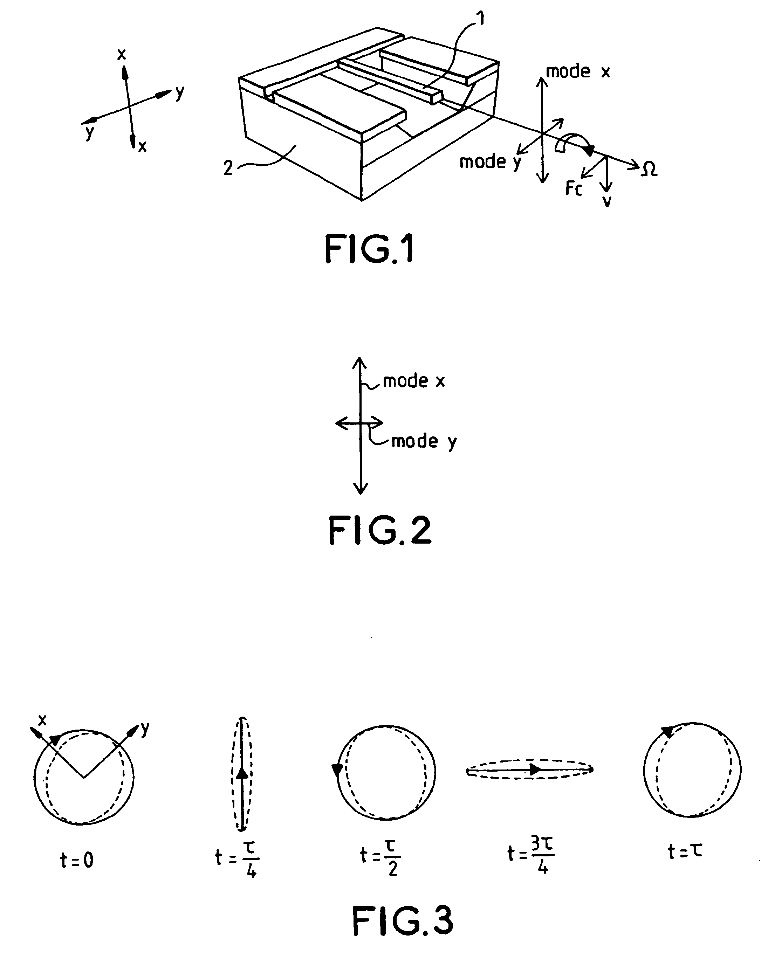

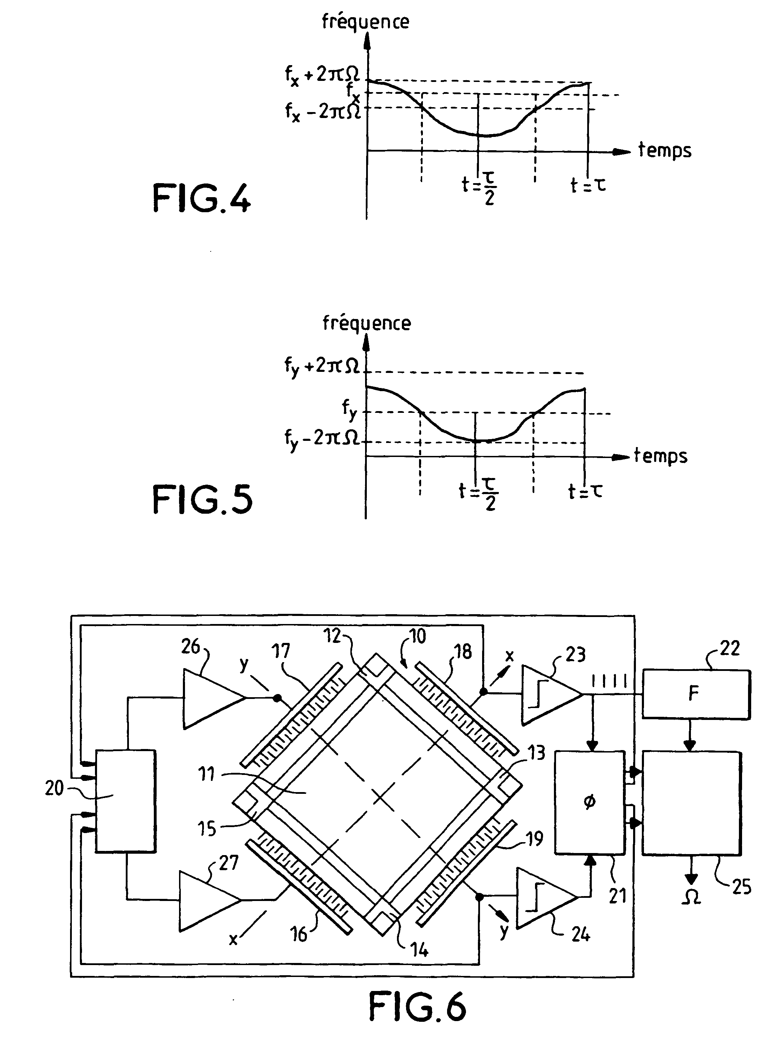

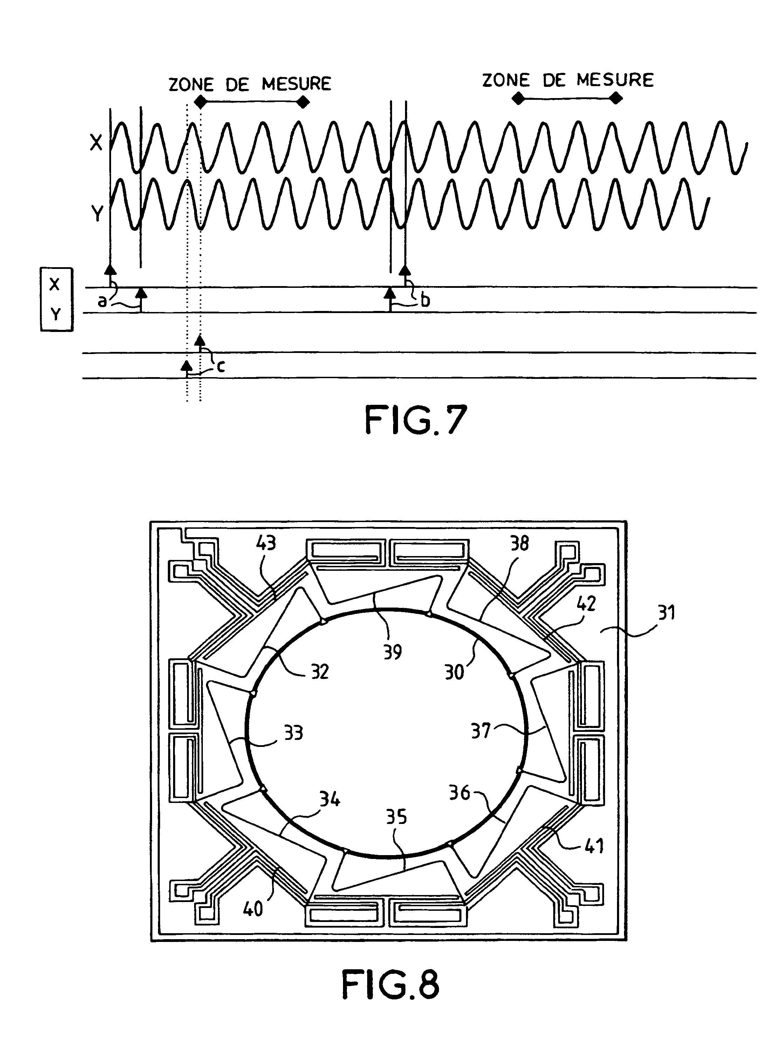

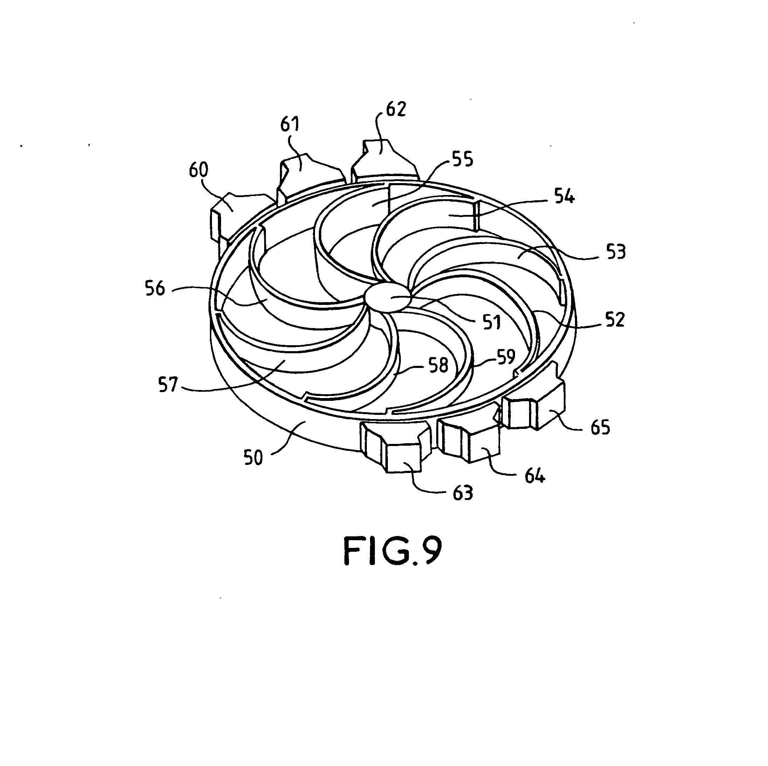

- une figure 1 est un schéma de principe des gyromètres à masse vibrante connus dans la technique antérieure,
- une figure 2 montre les trajectoires linéaires des vibrations d'excitation et de détection animant, dans la technique antérieure, une masse vibrante de gyromètre au cours d'une mesure de vitesse de rotation,
- une figure 3 montre un défilement des trajectoires elliptiques à excentricité variable parcourue par la masse vibrante d'un gyromètre selon l'invention au cours d'une mesure de vitesse de rotation,
- des figures 4 et 5 sont des diagrammes illustrant les effet d'un mouvement de rotation sur les fréquences apparentes de vibration selon deux axes orthogonaux de la masse vibrante d'un gyromètre conforme à l'invention,
- une figure 6 est un schéma de principe d'un gyromètre à masse vibrante selon l'invention,
- une figure 7 est un diagramme de courbes explicitant le fonctionnement d'un gyromètre selon l'invention, et
- des figures 8 et 9 montrent des exemples de systèmes mécaniques à masse vibrante utilisables dans un gyromètre selon l'invention.

La plupart des gyromètres à masse vibrante actuellement connus peuvent être assimilés à celui montrée à la figure 1 fonctionnant de la manière représentée à la figure 2.

Une masse suspendue représentée sous forme d'un barreau flexible 1 fixée par une extrémité à un support 2 peut osciller selon deux modes de vibration orthogonaux à trajectoires linéaires, l'un le mode x ayant une trajectoire linéaire selon un axe xx, l'autre le mode y ayant une trajectoire linéaire selon un axe yy orthogonal à l'axe xx, ces deux modes n'ayant pas forcément des fréquences identiques.

La technique de mesure utilisée jusqu'à aujourd'hui consiste à faire vibrer la masse suspendue 1 selon l'un des modes appelé mode d'excitation, ici le mode x et à déduire la vitesse de rotation Q du boîtier du gyromètre selon l'axe directeur du plan xy, de l'amplitude de la vibration de la masse en mode y provoquée par la force de Coriolis $F_c$, le mode y étant appelé mode de détection. Cette technique de mesure impose des limites à la stabilité des dispositifs qui l'utilisent.

Considérons le cas d'un dispositif micro-électro-mécanique MEMs, le mouvement d'excitation se fait à une fréquence de l'ordre de 10 KHZ avec une amplitude x0 de 10 $\mu$m. La masse en jeu est de l'ordre de 5.e-7kg et le coefficient de qualité de l'ordre de 50000 . La vitesse d'excitation est alors de :

$$v_x = 2\pi f x_0 = 0.628 \; m/s$$

L'accélération en x due à l'excitation est :

$$\gamma_x = (2\pi f)^2 \, x_0 = 4000g$$

L'accélération de Coriolis est de :

$$\gamma_c = 2\Omega v_x = 0.62 \mu g/°/h$$

Si l'on détecte l'accélération de Coriolis au travers du résonateur y de surtension Qy, le mouvement est alors :

$$y = \frac{Q\gamma_c}{(2\pi f)^2} = 7.7e\text{-}11 \ m/°/h$$

Si la détection est faite au travers d'un résonateur avec fréquences décalées de 100 Hz, le mouvement devient :

$$y = \frac{\gamma_c}{(2\pi f)^2 2\frac{\Delta f}{f}} = 7.7e\text{-}14 \ m/°/h$$

Ces valeurs sont très petites par rapport aux déformations du système du fait des vibrations, contraintes et dilatations mais ne sont pas hors de portée des capteurs de position utilisés dans les systèmes micro-électro-mécaniques MEMs. Il faut cependant prendre en compte les défauts d'alignement des forces de raideur et les défauts de l'électronique contrôlant l'excitation et traitant les signaux des capteurs de position pour estimer l'amplitude de la vibration due à la force de Coriolis.

Du fait des imperfections de raideur ou de masse, le mouvement d'excitation n'est pas parfaitement aligné selon l'axe xx et possède une composante indésirable selon l'axe yy.

Selon l'origine de l'imperfection, cette composante est à l'origine de forces parasites selon l'axe yy en quadrature (cas d'un défaut de raideur ou de masse) ou en phase (cas d'un défaut d'amortissement) avec la force de Coriolis.

Un défaut de raideur se traduit par le fait que la force de raideur induite par le mouvement d'excitation présente un mésalignement $\alpha$ et possède une composante selon l'axe yy :

$$F_y = \alpha F_x = \alpha k_x x \ (k_x \text{ raideur du mode d'excitation, x mouvement d'excitation})$$

Il apparaît donc une force parasite de raideur ($\alpha k_x x$) selon l'axe yy, en phase avec le déplacement selon l'axe xx, donc en quadrature de phase avec la force de Coriolis. Un tel défaut d'alignement est par exemple provoqué par des poutres de flexion dont les flancs seraient inclinés de $\alpha$ radians ou, plus généralement, dont les axes principaux d'inertie seraient inclinés de $\alpha$ radians. Cette force parasite peut être comparée à la force de Coriolis :

$$\frac{\alpha F_x}{m\gamma_c} = \frac{\alpha k_x x}{2m\omega x \Omega} = \frac{\alpha m\omega^2 x}{2m\omega x \Omega} = \alpha \ \frac{\omega}{2\Omega} \qquad [1]$$

Elle est à l'origine d'un biais en quadrature $K0_\perp$ qui n'est rien d'autre que cette force parasite exprimé en unité de vitesse de rotation :

$$K0_\perp = \alpha \ \frac{\omega}{2} \qquad [2]$$

Ce biais $K0_\perp$ de mésalignement contribue à faire dériver le gyromètre. La question qui se pose alors est la suivante : quel est le mésalignement maximum acceptable qui garantisse une répétabilité de quelques °/h. Ce biais $K0_\perp$ étant en quadrature avec le signal utile peut être éliminé par démodulation mais cela suppose que la démodulation se fasse sans erreur de phase. Avec une erreur de phase de démodulation $\alpha_{dem}$, une partie K0 de ce biais se retrouve sur la sortie du gyromètre :

$$K0 = \alpha_{dem}K0_\perp \qquad [3]$$

La répétabilité du biais de sortie s'écrit alors :

$$\Delta K0 = \Delta\alpha_{dem} \cdot K0_{\perp} = \Delta\alpha_{dem}\alpha\frac{\omega}{2} \qquad\qquad [4]$$

Ainsi la répétabilité de biais $\Delta$K0 dépend non seulement du défaut d'alignement $\alpha$ de la force de raideur mais aussi de la stabilité de la phase de démodulation de l'électronique $\Delta\alpha_{dem}$.

Si l'on vise une répétabilité de biais de 5°/h, le produit $\Delta\alpha_{dem} \cdot\alpha$ doit donc être :

$$\Delta\alpha_{dem} \cdot\alpha = 2\frac{\Delta K_0}{\omega} = 2\frac{5}{2*180*10000*3600} = 7.7e\text{-}10\ rad^2$$

Si l'on utilise une électronique analogique, la précision de phase $\Delta\alpha_{dem}$ ne peut probablement pas dépasser 0.05°. Pour garantir la répétabilité de 5°/h, cela impose que, le défaut d'alignement $\alpha$ de la force de raideur soit inférieur à 0.9 µrad ! Cela équivaut à un décalage de 0.5 Angströms entre la face inférieure et la face supérieure des poutres de raideur ! (pour une hauteur de 60 µm), ce qui est nettement inférieur à la taille d'une maille du réseau cristallin du silicium (5.4 Angströms)

On conçoit aisément qu'il est irréaliste de garantir un si faible défaut d'alignement même avec un équilibrage poussé.

Pour améliorer la répétabilité de biais d'un gyromètre à masse vibrante, on propose de ne pas faire vibrer la masse suspendue sur une trajectoire linéaire mais de lui faire décrire une trajectoire circulaire dans un sens puis dans l'autre, avec une vitesse égale ou très proche de la pulsation propre du système et de déduire la vitesse de rotation du boîtier du gyromètre selon l'axe directeur du plan de la trajectoire circulaire, de la différence des vitesses de parcours, dans un sens et dans l'autre de la trajectoire circulaire.

Le gyromètre à masse vibrante a toujours une structure pouvant se ramener au schéma de la figure 1 mais comporte des moteurs de déplacement commandés de manière à animer la masse suspendue ou une partie de celle-ci d'un mouvement circulaire s'inversant au cours du temps et un dispositif de traitement des signaux des capteurs de déplacement de la masse vibrante tirant la vitesse de rotation du porteur du gyromètre, de la différence observée entre des mesures de fréquence et/ou de phase du mouvement circulaire animant la masse ou une partie de celle-ci lorsqu'elle décrit sa trajectoire circulaire dans un sens et dans l'autre.

La masse est lancée aux moyens des moteurs de déplacement sur une trajectoire circulaire avec une vitesse de rotation $\omega_0$ égale ou très proche de la pulsation propre du système. Par exemple si les résonateurs ont une fréquence propre de 10000 Hz, la masse doit être lancée à une vitesse de 10000 tours par seconde. Après lancement de la masse, si l'on coupe l'excitation, celle-ci va continuer à parcourir librement sa trajectoire circulaire avec une vitesse de rotation $\omega_0$ égale à la pulsation de résonance du système.

Lorsque le boîtier du gyromètre est soumis à une vitesse de rotation $\Omega$ selon l'axe directeur du plan de la trajectoire circulaire de la masse suspendue, la vitesse apparente du mouvement circulaire de la masse du gyromètre par rapport au boîtier devient égale $\omega_0$-$\Omega$ car la vitesse de mouvement circulaire de la masse du gyromètre reste constante par rapport à un repère absolu.

Tout se passe comme si la masse était désolidarisée du boîtier. On peut faire l'analogie avec le gyromètre accordé pour lequel la toupie apparaît libre dans l'espace lorsque qu'elle est entraînée sur la fréquence d'accord (qui en quelque sorte est aussi une fréquence de résonance puisqu'elle est obtenue lorsque les couples dynamiques compensent les couples de raideur).

La mesure de la vitesse de rotation de la masse du gyromètre sur sa trajectoire circulaire donne accès à une information gyrométrique. Bien sûr, du fait de l'amortissement, le mouvement circulaire de la masse doit être périodiquement relancé. Mais l'amortissement est suffisamment faible pour que les perturbations sur le mouvement soient négligeables lors des mesures.

Dans la pratique le système présente plusieurs types d'imperfections :

- Le mouvement circulaire demande à la masse suspendue d'avoir des fréquences propres de résonance identiques dans deux directions orthogonales. Or celles-ci ne peuvent jamais être parfaitement identiques et présentent toujours de légères différences.
- Il existe des couplages parasites de masse/raideur et d'amortissement entre les excitations dans les deux directions orthogonales apportées par les moteurs de déplacement.
- Les oscillations provoquées dans deux directions orthogonales par les moteurs de déplacement ne sont jamais strictement harmoniques. Leurs fréquences dépendent donc de leurs amplitudes.
- La fréquence du mouvement circulaire dépend de son amplitude.

Le battement dû au décalage existant entre les fréquences de résonance dans les deux directions orthogonales du plan de la trajectoire de la masse suspendue a pour effet de faire décrire à la masse suspendue des figures de Lissajous, sa trajectoire prenant une forme générale elliptique dont l'excentricité évolue périodiquement de +1, où elle a une forme circulaire, à -1 où elle retrouve une forme circulaire en passant par 0 où elle s'aplatit en une forme linéaire. En effet, supposons que les fréquences de résonance soient décalées de $\Delta f_0$ et que le boîtier du gyromètre soit immobile ($\Omega=0$). La forme de la trajectoire de la masse suspendue va se modifier périodiquement avec une périodicité égale à :

$$\tau = \frac{1}{\Delta f_0}$$

la trajectoire de la masse suspendue passant successivement par les quatre formes typiques représentées à la figure 3:

- une forme circulaire décrite dans le sens direct à la vitesse de rotation $\omega_0$ ($\omega_0$ étant égale à la moyenne des pulsations propres de chaque résonateur),
- une forme linéaire directe de fréquence de vibration $\omega_0$,
- une forme circulaire décrite dans le sens inverse mais avec la même vitesse de rotation $\omega_0$, et
- une forme linéaire inverse de fréquence de vibration $\omega_0$ Ces quatre formes de trajectoire apparaissent successivement à :

$$t=0, \frac{\tau}{4}, \frac{\tau}{2}, \frac{3\tau}{4}$$

Les passages de l'une à l'autre se font par une évolution progressive de l'excentricité, une trajectoire de forme circulaire prenant progressivement une forme linéaire puis à nouveau une forme circulaire comme cela se produit dans les figures de Lissajous.

Lorsque le boîtier du gyromètre est soumis à un mouvement de rotation de vitesse $\Omega$ selon l'axe directeur de la trajectoire circulaire de la masse suspendue, la vitesse apparente de rotation de la masse suspendue sur les trajectoires de forme circulaire sera $\omega_0 - \Omega$ pour un parcours dans le sens direct et $-\omega_0 -\Omega$ pour un parcours dans le sens inverse tandis que la pulsation de parcours des trajectoires de forme linéaire sera $\omega_0$. L'information gyrométrique qui est la mesure de la vitesse de rotation $\Omega$ apparaît dans la somme algébrique des vitesses apparentes de rotation de la masse suspendue lorsqu'elle parcourt une trajectoire de forme circulaire dans le sens direct $\omega_{ad}$ et dans le sens inverse $\omega ai_0$ :

$$- 2\Omega = \omega_{ad} + \omega_{ai} = \omega_0 - \Omega - \omega_0 - \Omega$$

La combinaison des vitesses apparentes de rotation de la masse suspendue lorsqu'elle parcourt la même trajectoire de forme circulaire dans le sens direct et dans le sens inverse permet d'éliminer de la mesure de l'information gyrométrique, les effets perturbateurs des couplages parasites dont ceux dus aux mésalignements sur la vitesse de rotation $\omega_0$.

Lorsque l'on mesure la fréquence de la composante du mouvement en xx (ou en yy) par exemple, on observe une modulation de la fréquence autour de la fréquence propre de résonance de la masse suspendue selon xx (ou selon yy) comme illustrés aux figures 4 et 5.

L'inversion « naturelle » du sens de rotation de la masse suspendue du gyromètre découlant d'une différence entre les fréquences propres de résonance de la masse suspendue selon deux directions orthogonales xx, yy du plan de sa trajectoire est mise à profit pour simplifier la mesure gyrométrique. Au lieu de rechercher des fréquences propres de résonance rigoureusement égales dans deux directions orthogonales, on introduit volontairement un décalage entre elles.

On choisit par exemple un écart de fréquence de 100 Hz pour une fréquence moyenne de 10000 Hz. Si l'on observe le mouvement de la masse suspendue selon l'axe xx sur une durée de 10ms, on verra 100 alternances avec une fréquence instantanée variant de façon sinusoïdale entre $f_x + 2\pi\Omega$ et $f_x - 2\pi\Omega$.

Comme les variations de fréquence à mesurer sont faibles, une vitesse de rotation de 100°/h provoquant une variation de la fréquence de 0.003 Hz correspondant à 0.3 ppm de la fréquence centrale, il est préférable que la fréquence soit mesurée dans chaque sens par un même système électronique et selon le même processus, par exemple, par une mesure du temps séparant deux passages, dans un même sens, de la masse vibrante par la position zéro selon l'axe xx', la position zéro étant la position médiane selon l'axe xx.

Un système électronique de mesure utilisable pour les mesures des fréquences apparentes de parcours d'une trajectoire circulaire, dans les deux sens, par la masse suspendue et de réalisation simple peut être construit à partir d'un convertisseur analogique-numérique échantillonnant en numérique sur 12 bits, à une cadence d'échantillonnage de quelques dizaines de kiloHertz, le signal d'un capteur électrostatique de position et d'un circuit de détection de fréquence fonctionnant par exemple, par analyse de Fourier.

En observant sur des fenêtres de 20 ms (200 cycles) centrées sur les instants où la masse suspendue est animée d'un mouvement de rotation circulaire droite ou gauche, on peut obtenir une précision de l'ordre de 100 microHertz (jitter de numérisation : 100 µRd moyenné sur 100 échantillons durant une période de 1000 Radians). L'erreur de cap est alors de l'ordre 10 µRd à chaque mesure et croît en raison de la racine du temps : soit 140 µRd en 1 s, 1 mRd en 1 minute, 0.5 degré en une heure. Pour exploiter complètement les performances d'un capteur de position couramment utilisé dans les systèmes micro-électro-mécaniques MEMs, il faudrait employer un convertisseur analogique-numérique de 16 bits. On pourrait alors raisonnablement espérer une erreur 10 fois inférieure. Cela montre à quel point l'absence de biais prime sur la précision de mesure.

La précision de l'information gyrométrique tirée des mesures repose sur la symétrie des mouvements circulaires contrarotatifs de la masse suspendue du gyromètre. Elle dépend des amplitudes des mouvements circulaires et de leur écart relatif ainsi que de la linéarité des forces de rappel des suspensions élastiques de la masse. En répartissant l'énergie élastique sur la masse en mouvement, on peut limiter la déformation à quelques $10^{-3}$ ; la non linéarité n'est qu'une fraction de la déformation du fait de la compensation entre partie comprimée et partie étirée.

L'énergie nécessaire à l'entretien du mouvement de la masse suspendue est de l'ordre du millième de l'énergie de l'oscillateur. Afin de diminuer la dissymétrie, cette énergie est préférentiellement injectée à la masse suspendue lorsqu'elle décrit les trajectoires linéaires assurant les transitions entre les trajectoires circulaires dans une figure de Lissajous en lui appliquant des forces impulsionnelles dans la direction de son déplacement, préférablement à son passage par zéro, c'est-à-dire par les points milieu des trajectoires linéaires. Les forces impulsionnelles délivrées dans la direction xx le seront par le même moteur de déplacement pour chacune des phases linéaires ; il en est de même dans la direction yy.

La figure 6 illustre schématiquement un exemple de réalisation d'un gyromètre à masse vibrante fonctionnant de la manière qui vient d'être décrite. On y distingue une pièce micro-électro-mécanique MEMs 10 composée d'une masse suspendue 11, de forme carrée, fixée par des lames souples 12 à 15 à un support non visible car placé en dessous, de moteurs 16, 17 de déplacement, de type électrostatique, placés sur le support, le long de deux côtés adjacents de la masse 11 de manière à pouvoir l'entraîner selon deux directions coplanaires orthogonales xx et yy et de capteurs de position 18, 19, de type électrostatique, placés sur le support le long des deux autres côtés adjacents de la masse 11 de manière à mesurer les déplacements de cette dernière dans les deux directions xx et yy.

La masse 11 ainsi que les lames souples 12 à 15 des suspensions sont configurées de manière à respecter des symétries par rapport à deux axes coplanaires xx et yy. Les raideurs des lames souples sont ajustées, par exemple par érosion de matière au moyen d'un laser, de manière à donner à la masse suspendue des modes propres de résonance dans les deux directions orthogonales xx et yy ayant un écart de fréquence de l'ordre de 100 Hertzs.

Les moteurs de déplacement 16, 17 permettent de mettre la masse 11 en mouvement dans le plan de la figure pour réaliser un gyromètre sensible aux rotations de son boîtier selon l'axe directeur du plan de la figure. L'un, le moteur de déplacement 16 excite un mode de vibration du système constitué par la masse 11 et de ses suspensions à lames souples 12 à 15, orienté selon l'axe xx du plan de la figure tandis que l'autre, le moteur de déplacement 17 excite un autre mode de vibration du système constitué de la masse 11 et de ses suspensions à lames souples 12 à 15, orthogonal au premier et orienté selon l'axe yy du plan de la figure.

Les capteurs de position 18, 19 fournissent des signaux de mesure des déplacements de la masse suspendue dans les directions xx et yy utilisés par un générateur d'impulsions 20, à un circuit de mesure de déphasage 21 et un circuit fréquencemètre 22.

Le circuit de mesure de déphasage 21 détecte les instants où les oscillations de la masse suspendue 11 selon les directions xx et yy sont en phase, en opposition de phase, en quadrature avance et en quadrature retard. Pour ce faire, il exploite les passages par zéro des signaux fournis par les capteurs de déplacement 18, 19 qui sont mis en évidence par des amplificateurs écrêteurs 23, 24.

Le fréquencemètre 22 mesure la fréquence des oscillations de la masse suspendue selon la direction xx à partir des passages par zéro du signal du capteur de position 18 mis en évidence par l'amplificateur écrêteur 23 et fournit cette mesure de fréquence à un circuit 25 d'extraction de l'information gyrométrique $\Omega$.

Le circuit 25 d'extraction de l'information gyrométrique $\Omega$ utilise les informations délivrées par le fréquencemètre 22 et par le circuit de mesure de déphasage 21. Plus précisément, il prend en compte les mesures de fréquence délivrées par le fréquencemètre 22 lorsque le circuit de mesure de déphasage 21 lui signale que les oscillations de la masse suspendue 11 sont proches d'une quadrature avant ou arrière caractéristique d'un mouvement circulaire. Il effectue une moyenne des mesures de fréquences reçues sur quelques dizaines de tours puis soustrait les moyennes obtenues pour une quadrature avance et une quadrature arrière et interprète le résultat de la soustraction comme une mesure du double de la vitesse de rotation du boîtier du montage selon l'axe directeur du plan contenant les deux axes coplanaires xx et yy.

Le générateur d'impulsions 20 délivre des impulsions d'excitation aux moteurs de déplacement 16, 17 par l'intermédiaire de deux amplificateurs d'impulsion 26, 27. Il ajuste les amplitudes et/ou la fréquence de ces impulsions et les directions que doit avoir la vitesse de la masse suspendue aux moments d'application de ces impulsions aux moteurs de déplacement 16, 17 de manière à entretenir des mouvements oscillatoires de la masse suspendue selon les axes orthogonaux xx et yy avec des amplitudes moyennes constantes et identiques. Pour ce faire, il comporte un asservissement extrayant des signaux des capteurs de position 18, 19 les amplitudes moyennes des mouvements oscillatoires de la masse suspendue 11 selon les axes orthogonaux xx et yy, pour les comparer à une consigne et utiliser les écarts détectés afin de déterminer les amplitudes et/ou les fréquences des impulsions à émettre ainsi que les directions que doit avoir la vitesse de la masse suspendue au moment de leurs applications aux moteurs de déplacement 16, 17. Une fois qu'il a déterminé les amplitudes et/ou les fréquences des impulsions à émettre et les directions que doit avoir la vitesse de la masse suspendue au moment de leurs applications, l'asservissement du générateur d'impulsion 20 utilise les informations du circuit de mesure de déphasage 23, pour identifier l'orientation instantanée de la vitesse de déplacement de la masse suspendue et émettre aux moments convenables, les impulsions d'excitation à destination des moteurs de déplacement 16, 17.

Les diagrammes de la figure 7 illustrent des modes possibles d'entretien du mouvement de la masse suspendue 11 pendant les phases où la masse suspendue oscille selon des trajectoires linéaires.

Si l'on ne tient pas compte des imperfections du système mécanique constitué par la masse suspendue et de la contribution des rotations extérieures, le simple entretien du mouvement pendant les phases d'oscillation à trajectoire linéaire qui sont orientées à 45°et 225° de l'axe xx comme montré à la figure 3, peut se faire en fournissant aux moteurs de déplacement 16, 17 des couples d'impulsions de même amplitude séparées par un nombre pair de demi cycles lors des passages en phase (couple d'impulsions a) et par un nombre impair de demi cycles lors des passages en opposition de phase (couple d'impulsions b) des oscillations de la masse suspendue 11 selon les directions orthogonales xx et yy. Les impulsions de ces couples sont appliquées avec un signe convenable pour accélérer la masse suspendue et avoir un effet constructif puisque l'entretien du mouvement a pour but de contrecarrer les frottements. Chaque impulsion est appliquée à un moteur de déplacement 16, 17, de préférence, aux moments où la masse suspendue passe par le milieu de sa trajectoire linéaire.

Il est avantageux, afin de minimiser l'influence de l'électronique sur les défauts d'appairage des impulsions électroniques et des transducteurs utilisés dans les moteurs et les capteurs, d'utiliser le même circuit pour entretenir le mouvement de la masse suspendue lors d'une phase de trajectoire linéaire à 45° ou d'une phase de trajectoire linéaire à 225°.

Pour corriger les dérives angulaires des phases de mouvement linéaire de la masse suspendue dues aux imperfections du système mécanique constitué par la masse suspendue et à la contribution des rotations extérieures, le générateur d'impulsions 20 engendre également des couples d'impulsions (c figure 7) d'amplitudes variables à des instants où la vitesse de la masse suspendue est alignée avec l'axe xx pour le moteur de déplacement 16 et avec l'axe yy pour le moteur de déplacement 17.

Le schéma qui vient d'être décrit relativement à la figure 6 peut s'accommoder de nombreuses variantes.

Les moteurs de déplacement et les capteurs de position qui ont souvent une constitution identique en technologie micro-électro-mécanique MEMs peuvent être constitués de dispositifs jouant alternativement un rôle de moteur et un rôle de capteur. De même, moteurs et capteurs peuvent être plus nombreux. Dans ce cas, ils sont préférentiellement répartis en deux groupes spécialisés chacun dans l'excitation et la détection de l'un des modes propres orthogonaux de vibration de la masse suspendue. Les moteurs et capteurs ne peuvent également être de type pièzo-électrique.

La masse suspendue présente une symétrie par rapport aux deux axes xx et yy mais n'est pas nécessairement carré. Diverses formes polygonales et autres conviennent. Elle peut même être constituée de eux masses vibrantes associées de telle manière que leur barycentre reste fixe, obtenues par exemple, par des associations de poutres et de points de flexion.

Une forme préférentielle pour la masse suspendue est celle d'un anneau, cylindre ou bol, car elle correspond à un système complètement équilibré et isolé.

Love (theory of elasticity 1927) et Timoshenko (vibration problems in engineering 1937) ont analysé les modes de vibrations d'un anneau et ont montré l'existence de deux types de modes fondamentaux, un premier type de la forme :

$$R = a\cos(2\omega t) + b\sin(2\omega t)$$

Et un deuxième type de la forme :

$$T=0.5 \ b \cos(2 \ \omega t) - 0.5 \ a \sin(2 \ \omega t)$$

où R et T sont les déplacements radiaux, a et b sont les amplitudes dépendant sinusoïdalement du temps.

Il est difficile de se représenter physiquement le comportement d'une masse mobile en anneau excitée selon ces deux modes de vibration fondamentaux mais, en réalité, on obtient un fonctionnement tout à fait analogue à celui de la masse suspendue animée de deux mouvements de vibration à trajectoires linéaires orthogonales. Les deux axes de vibrations a et b ne sont plus perpendiculaires mais écartés de 45°. Ces vibrations sont des oscillations orthogonales au sens mathématique du terme car elles peuvent être excitées indépendamment. Pour des oscillations égales et en quadrature :

$$a = \cos (\omega t)$$

$$b = \sin (\omega t)$$

le mouvement de chaque élément de l'anneau est du type

$$R= \cos (\omega t - 2\ominus)$$

$$T=0.5 \ a \sin(\omega t - 2\ominus)$$

L'information gyrométrique est affectée d'un facteur de forme de l'ordre de 0.7. du fait des mouvements elliptiques de chaque élément de l'anneau. Les moyens d'excitation et de détection droit et à 45° peuvent être, par exemple, de type électrostatique. Afin d'engendrer des figures de Lissajous, les modes droit et à 45° doivent résonner à des fréquences légèrement différentes. Cela est obtenu en introduisant un petit défaut de rigidité ou de masse suivant les directions droite ou 45.

La figure 8 donne un exemple de réalisation en technologie micro-electro-mécanique MEMS, d'un gyromètre avec une masse vibrante annulaire 30 fixée à un support 31 par sa périphérie extérieure au moyen de huit bras élastiques déformables 32 à 39 dont certains 32, 34, 36, 38 font partie de moteurs 40, 43 ou de capteurs 41, 42 de position de type électrostatique. Une dissymétrie est introduite sur deux bras opposés de manière à obtenir des fréquences de résonance légèrement différentes pour les deux modes de vibration fondamentaux de l'anneau afin d'obtenir un battement produisant un écart de phase défilant entre les deux modes fondamentaux de vibrations et engendrant une figure de Lissajous.

La figure 9 donne un autre exemple de réalisation de gyromètre à masse vibrante annulaire dans lequel la masse vibrante annulaire 50 est fixée à un moyeu 51 solidaire d'un support au moyen de huit bras élastiques déformables 52 à 59 attachant le moyeu 51 à sa périphérie intérieure. Des électrodes 60 à 65 disposées sur le support à la périphérie extérieure de l'anneau permettent d'entretenir les deux modes de vibration fondamentaux de l'anneaux, de les contrôler et de détecter leur déphasage instantanée. Comme dans l'exemple précédent, une dissymétrie est introduite entre des bras opposés de manière à obtenir des fréquences de résonance légèrement différentes entre les deux modes de vibrations fondamentaux dont les battements produisent une figure de Lissajous.

Les deux modes de réalisation de gyromètre à masse suspendue annulaire ne sont que des exemples parmi d'autres. Toutes les formes de masse suspendue telles que les formes en bol ou cylindre utilisée selon la méthode ancienne consistant à exciter un premier mode fondamental de vibration et à rechercher l'effet de la force de Coriolis sur un deuxième mode fondamental de vibration orthogonal au premier sont utilisables avec la nouvelle méthode préconisée basée sur une mesure de la périodicité apparente du mouvement de la masse suspendue lorsqu'elle est le siège de deux modes orthogonaux de vibration de même amplitude en quadrature de phase avance et retard.

**Revendications**

**1.** Gyromètre à masse vibrante comportant un support, une masse (11), des suspensions élastiques (12 à 15) fixant la masse (11) au support, et un ou plusieurs moteurs de déplacement (16, 17) entretenant un mouvement vibratoire de la masse suspendue (11), des capteurs de position (18, 19) des éléments en mouvement de la masse suspendue (11) et un dispositif de traitement (21 à 25) extrayant une mesure de vitesse d'oscillation circulaire à partir des signaux délivrés par les capteurs de position (18, 19), **caractérisé en ce que** :

- le système mécanique constitué par la masse (11) et les suspensions élastiques (12 à 15) la fixant au support est configuré pour présenter au moins deux modes propres orthogonaux d'oscillation dont la combinaison induit un mouvement circulaire droit ou gauche d'une partie au moins de la masse suspendue (11),
- le/les moteurs de déplacement (16, 17) sont configurés pour exciter les deux modes d'oscillation orthogonaux de manière à provoquer alternativement des mouvements circulaires droit et gauche d'une partie au moins de la masse suspendue, et
- le dispositif de traitement (21 à 25) est configuré pour mesurer la fréquence et/ou la phase de chaque mouvement circulaire droit ou gauche à partir des signaux fournis par les capteurs de position (18, 19) et pour extraire une mesure de vitesse de rotation de la différence des mesures de fréquences et/ou de phase entre mouvement circulaire droit et mouvement circulaire gauche.

2. Gyromètre selon la revendication 1, **caractérisé en ce que** la masse vibrante est une masse déformable (30) et **en ce que** le système mécanique constitué de la masse vibrante déformable (30) et des suspensions élastiques (32 à 39) présente au moins deux modes propres dont la combinaison induit une composante majoritaire de déplacement circulaire droit ou gauche des éléments de la masse déformable (30).

3. Gyromètre selon la revendication 1, **caractérisé en ce que** les deux modes propres orthogonaux d'oscillation ont un léger décalage de fréquence provoquant, par battement, une évolution spontanée d'un mouvement circulaire droit de la masse suspendue (11) ou d'une partie de celle-ci, en un mouvement circulaire gauche et réciproquement.

4. Gyromètre selon la revendication 1, **caractérisé en ce qu'**il comporte un asservissement utilisant les signaux des capteurs de position (18, 19) et du dispositif de traitement (21 à 25) pour contrôler le/les moteurs de déplacement (16, 17) de manière à maintenir constantes et égales les amplitudes des mouvements circulaires droit et gauche.

5. Gyromètre selon la revendication 1, **caractérisé en ce que** les deux modes propres orthogonaux d'oscillation ont un léger décalage de fréquence provoquant, par battement, une transformation périodique d'un mouvement circulaire droit de la masse suspendue (11) ou d'une partie de celle-ci, en un mouvement circulaire gauche et réciproquement, en passant par des étapes intermédiaires à mouvement linéaire.

6. Gyromètre selon la revendication 5, **caractérisé en ce qu'**il comporte un asservissement utilisant les signaux des capteurs de position (18, 19) et du dispositif de traitement (21 à 25) pour contrôler les moteurs de déplacement (16, 17) de manière à maintenir constantes et égales les amplitudes des mouvements circulaires droit et gauche.

7. Gyromètre selon la revendication 6, **caractérisé en ce que** l'asservissement délivre aux moteurs de déplacement (16, 17) des impulsions d'excitations pendant les étapes intermédiaires à mouvement linéaire de la masse suspendue (11) ou d'une partie de celle-ci.

8. Gyromètre selon la revendication 6, **caractérisé en ce que** l'asservissement délivre aux moteurs de déplacement (16, 17) des impulsions d'excitations pendant les étapes intermédiaires à mouvement linéaire de la masse suspendue (11) ou d'une partie de celle-ci, au moment des passages de la masse suspendue (11) ou d'une partie de celle-ci par le point milieu de sa trajectoire linéaire.

9. Gyromètre selon la revendication 1, **caractérisé en ce que** le dispositif de traitement (21 à 25) mesure la fréquence et/ou la phase de chaque mouvement circulaire droit ou gauche à partir des signaux fournis par des capteurs de position (18) sensibles à l'un des modes propres orthogonaux d'oscillation de la masse suspendue (11) ou d'une partie de celle-ci.

10. Gyromètre selon la revendication 1, **caractérisé en ce que** le dispositif de traitement comporte un circuit (21) de détection de quadratures avance et retard entre les composantes des signaux des capteurs de position relatives à l'un des modes propres d'oscillations et les composantes des signaux des capteurs de position relatives à l'autre mode propre orthogonal d'oscillation.

11. Gyromètre selon la revendication 1, **caractérisé en ce que** les moteurs de déplacement (16, 17) et capteurs de position (18, 19) sont constitués d'un même dispositif jouant alternativement les deux rôles.

12. Gyromètre selon la revendication 1, **caractérisé en ce que** les moteurs de déplacement (16, 17) influent individuellement sur l'un des modes propres orthogonaux d'oscillation et pas sur l'autre et sont répartis en deux groupes d'égales importances, les moteurs de déplacement d'un groupe agissant sur l'un des modes propres d'oscillation et ceux de l'autre groupe agissant sur l'autre mode propre d'oscillation.

13. Gyromètre selon la revendication 1, **caractérisé en ce que**, les moteurs de déplacement (16, 17) et capteurs de position (18, 19) sont constitués d'un même dispositif jouant alternativement les rôles de moteur et de capteur de position, agencés pour influer sur l'un des modes orthogonaux et pas sur l'autre, et répartis en deux groupes selon qu'ils agissent sur l'un ou l'autre des deux modes orthogonaux d'oscillation.

14. Gyromètre selon la revendication 1, **caractérisé en ce que** la masse suspendue (11) est fixée au support par un ensemble de suspensions élastiques (12 à 15) lui permettant d'osciller dans un plan avec des modes propres de fréquences différentes selon deux directions orthogonales.

15. Gyromètre selon la revendication 1, **caractérisé en ce que** la masse suspendue (11) est constituée de deux masses vibrantes associées de telle manière que leur barycentre reste fixe.

16. Gyromètre selon la revendication 1, **caractérisé en ce que** la masse suspendue est constituée de deux masses vibrantes à barycentre fixe obtenues par des associations de poutres et de points de flexion.

17. Gyromètre selon la revendication 1, **caractérisé en ce que** la masse suspendue est un anneau (30, 50) avec deux modes propres orthogonaux de flexion orientés selon des axes écartés de 45°.

18. Gyromètre selon la revendication 1, **caractérisé en ce que** la masse suspendue est un cylindre avec deux modes propres orthogonaux de flexion orientés selon des axes écartés de 45°.

19. Gyromètre selon la revendication 1, **caractérisé en ce que** la masse suspendue est un bol dont le bord présente avec deux modes propres orthogonaux de flexion orientés selon des axes écartés de 45°.

20. Gyromètre selon la revendication 1, **caractérisé en ce que** les moteurs de déplacement (16, 17) sont des dispositifs piézo-électrique.

21. Gyromètre selon la revendication 1, **caractérisé en ce que** les capteurs de position (18, 19) sont des dispositifs pièzo-électriques.

22. Gyromètre selon la revendication 1, **caractérisé en ce que** les moteurs de déplacement sont des dispositifs électrostatiques.

23. Gyromètre selon la revendication 1, **caractérisé en ce que** les capteurs de position (18, 19) sont des dispositifs électro-statiques.

**Patentansprüche**

1. Gyrometer mit schwingender Masse, das einen Träger, eine Masse (11), elastische Aufhängungen (12 bis 15), die die Masse (11) am Träger befestigen, und einen oder mehrere Verschiebungsantriebe (16, 17), die eine schwingende Bewegung der aufgehängten Masse (11) aufrechterhalten, Lagesensoren (18, 19) der in Bewegung befindlichen Elemente der aufgehängten Masse (11) und eine Verarbeitungsvorrichtung (21 bis 25) aufweist, die eine Messung der Kreisschwingungsgeschwindigkeit ausgehend von den Signalen extrahiert, die von den Lagesensoren (18, 19) geliefert werden, **dadurch gekennzeichnet, dass**:

   - das von der Masse (11) und den elastischen Aufhängungen (12 bis 15), die sie am Träger befestigen, gebildete System so konfiguriert ist, dass es mindestens zwei spezifische orthogonale Schwingungstypen aufweist, deren Kombination eine rechte oder linke Kreisbewegung mindestens eines Teils der aufgehängten Masse (11) induziert,
   - der/die Verschiebungsantrieb(e) (16, 17) konfiguriert sind, um die beiden orthogonalen Schwingungstypen so anzuregen, dass abwechselnd rechte und linke Kreisbewegungen mindestens eines Teils der aufgehängten Masse erzeugt werden, und
   - die Verarbeitungsvorrichtung (21 bis 25) konfiguriert ist, um die Frequenz und/oder die Phase jeder rechten oder linken Kreisbewegung ausgehend von Signalen zu messen, die von den Lagesensoren (18, 19) geliefert werden, und um eine Drehgeschwindigkeitsmessung der Differenz der Frequenz- und/oder Phasenmessungen zwischen der rechten und der linken Kreisbewegung zu extrahieren.

2. Gyrometer nach Anspruch 1, **dadurch gekennzeichnet, dass** die schwingende Masse eine verformbare Masse (30) ist, und dass das aus der verformbaren schwingenden Masse (30) und den elastischen Aufhängungen (32 bis 39) bestehende mechanische System mindestens zwei spezifische Schwingungsformen aufweist, deren Kombination eine Mehrheitskomponente der rechten oder linken Kreisverschiebung der Elemente der verformbaren Masse (30) induziert.

3. Gyrometer nach Anspruch 1, **dadurch gekennzeichnet, dass** die beiden spezifischen orthogonalen Schwingungstypen eine leichte Frequenzverschiebung aufweisen, die durch Überlagerung eine spontane Veränderung einer rechten Kreisbewegung der aufgehängten Masse (11) oder eines Teils von dieser in eine linke Kreisbewegung und umgekehrt bewirkt.

4. Gyrometer nach Anspruch 1, **dadurch gekennzeichnet, dass** es eine Regelung aufweist, die die Signale der Lagesensoren (18, 19) und der Verarbeitungsvorrichtung (21 bis 25) verwendet, um den/die Verschiebungsantrieb (e) (16, 17) so zu steuern, dass die Amplituden der rechten und linken Kreisbewegungen konstant und gleich gehalten werden.

5. Gyrometer nach Anspruch 1, **dadurch gekennzeichnet, dass** die beiden spezifischen orthogonalen Schwingungstypen eine leichte Frequenzverschiebung aufweisen, die durch Überlagerung eine periodische Umwandlung einer rechten Kreisbewegung der aufgehängten Masse (11) oder eines Teils von ihr in eine linke Kreisbewegung und umgekehrt bewirkt, die über Zwischenschritte mit geradliniger Bewegung verläuft.

6. Gyrometer nach Anspruch 5, **dadurch gekennzeichnet, dass** es eine Regelung aufweist, die die Signale der Lagesensoren (18, 19) und der Verarbeitungsvorrichtung (21 bis 25) verwendet, um die Verschiebungsantriebe (16, 17) so zu steuern, dass die Amplituden der rechten und linken Kreisbewegungen konstant und gleich gehalten werden.

7. Gyrometer nach Anspruch 6, **dadurch gekennzeichnet, dass** die Regelung während der Zwischenschritte mit geradliniger Bewegung der aufgehängten Masse (11) oder eines Teils von ihr Erregungsimpulse an die Verschiebungsantriebe (16, 17) liefert.

8. Gyrometer nach Anspruch 6, **dadurch gekennzeichnet, dass** die Regelung während der Zwischenschritte mit geradliniger Bewegung der aufgehängten Masse (11) oder eines Teils von ihr im Moment der Übergänge der aufgehängten Masse (11) oder eines Teils von ihr durch den Mittelpunkt ihrer geradlinigen Strecke Erregungsimpulse an die Verschiebungsantriebe (16, 17) liefert.

9. Gyrometer nach Anspruch 1, **dadurch gekennzeichnet, dass** die Verarbeitungsvorrichtung (21 bis 25) die Frequenz und/oder die Phase jeder rechten oder linken Kreisbewegung ausgehend von Signalen misst, die von Lagesensoren (18) geliefert werden, die für einen der spezifischen orthogonalen Schwingungstypen der aufgehängten Masse (11) oder eines Teils von ihr empfindlich sind.

10. Gyrometer nach Anspruch 1, **dadurch gekennzeichnet, dass** die Verarbeitungsvorrichtung eine Schaltung (21) zur Erfassung von Vorlauf- und Verzögerungsquadraturen zwischen den Komponenten der Signale der Lagesensoren bezüglich eines der spezifischen Schwingungstypen und den Komponenten der Signale der Lagesensoren bezüglich des anderen spezifischen orthogonalen Schwingungstyps aufweist.

11. Gyrometer nach Anspruch 1, **dadurch gekennzeichnet, dass** die Verschiebungsantriebe (16, 17) und Lagesensoren (18, 19) aus der gleichen Vorrichtung bestehen, die abwechselnd die beiden Aufgaben übernimmt.

12. Gyrometer nach Anspruch 1, **dadurch gekennzeichnet, dass** die Verschiebungsantriebe (16, 17) individuell einen der spezifischen orthogonalen Schwingungstypen und nicht den anderen beeinflussen und in zwei Gruppen gleicher Größe verteilt sind, wobei die Verschiebungsantriebe einer Gruppe auf einen der spezifischen Schwingungstypen und diejenigen der anderen Gruppe auf den anderen spezifischen Schwingungstyp einwirken.

13. Gyrometer nach Anspruch 1, **dadurch gekennzeichnet, dass** die Verschiebungsantriebe (16, 17) und Lagesensoren (18, 19) aus der gleichen Vorrichtung bestehen, die abwechselnd die Aufgabe eines Antriebs und eines Lagesensors übernimmt, die ausgelegt sind, um die eine orthogonale Schwingungsform zu beeinflussen und nicht die andere, und in zwei Gruppen aufgeteilt sind, je nachdem, ob sie auf den einen oder den anderen orthogonale Schwingungstyp einwirken.

14. Gyrometer nach Anspruch 1, **dadurch gekennzeichnet, dass** die aufgehängte Masse (11) am Träger über einen Satz von elastischen Aufhängungen (12 bis 15) befestigt ist, die es ihr erlauben, in einer Ebene mit spezifischen Schwingungsformen unterschiedlicher Frequenzen gemäß zwei orthogonalen Richtungen zu schwingen.

15. Gyrometer nach Anspruch 1, **dadurch gekennzeichnet, dass** die aufgehängte Masse (11) aus zwei schwingenden Massen besteht, die so verbunden sind, dass ihr Schwerpunkt ortsfest bleibt.

16. Gyrometer nach Anspruch 1, **dadurch gekennzeichnet, dass** die aufgehängte Masse aus zwei schwingenden Massen mit ortsfestem Schwerpunkt besteht, die durch Verbindungen von Balken und Biegepunkten erhalten werden.

17. Gyrometer nach Anspruch 1, **dadurch gekennzeichnet, dass** die aufgehängte Masse ein Ring (30, 50) mit zwei spezifischen orthogonalen Biegeschwingungsformen ist, die gemäß einen Abstand von 45° aufweisenden Achsen ausgerichtet sind.

18. Gyrometer nach Anspruch 1, **dadurch gekennzeichnet, dass** die aufgehängte Masse ein Zylinder mit zwei spezifischen orthogonalen Biegeschwingungsformen ist, die gemäß einen Abstand von 45° aufweisenden Achsen ausgerichtet sind.

19. Gyrometer nach Anspruch 1, **dadurch gekennzeichnet, dass** die aufgehängte Masse eine Schale ist, deren Rand zwei spezifische orthogonale Biegeschwingungsformen aufweist, die gemäß einen Abstand von 45° aufweisenden Achsen ausgerichtet sind.

20. Gyrometer nach Anspruch 1, **dadurch gekennzeichnet, dass** die Verschiebungsantriebe (16, 17) piezoelektrische Vorrichtungen sind.

21. Gyrometer nach Anspruch 1, **dadurch gekennzeichnet, dass** die Lagesensoren (18, 19) piezoelektrische Vorrichtungen sind.

22. Gyrometer nach Anspruch 1, **dadurch gekennzeichnet, dass** die Verschiebungsantriebe elektrostatische Vorrichtungen sind.

23. Gyrometer nach Anspruch 1, **dadurch gekennzeichnet, dass** die Lagesensoren (18, 19) elektrostatische Vorrichtungen sind.

**Claims**

1. Vibrating mass gyro comprising a support, a mass (11), elastic suspensions (12 to 15) fixing the mass (11) to the support, and one or more displacement motors (16, 17) sustaining a vibratory motion of the suspended mass (11), sensors (18, 19) of position of the moving elements of the suspended mass (11), and a processing device extracting a measurement of circular oscillation rate from the signals delivered by the position sensors (18, 19), **characterized in that**:

   - the mechanical system consisting of the mass (11) and the elastic suspensions (12 to 15) fixing said mass to the support is configured so as to exhibit at least two orthogonal natural modes of oscillation whose combination induces a right or left circular motion of a part at least of the suspended mass (11),
   - the displacement motor(s) (16, 17) are configured so as to excite the two orthogonal modes of oscillation so as to alternately cause right and left circular motions of a part at least of the suspended mass, and
   - the processing device (21 to 25) measures the frequency and/or the phase of each right or left circular motion on the basis of the signals provided by the position sensors (18, 19) and extracts a measurement of rate of rotation from the difference of the measurements of frequencies and/or of phase between right circular motion and left circular motion.

**2.** Gyro according to Claim 1, **characterized in that** the vibrating mass is a deformable mass (30) and **in that** the mechanical system consisting of the deformable vibrating mass (30) and of the elastic suspensions (32 to 39) exhibits at least two natural modes whose combination induces a majority component of right or left circular displacement of the elements of the deformable mass (30).

**3.** Gyro according to Claim 1, **characterized in that** the two orthogonal natural modes of oscillation have a slight frequency offset causing, by beating, a spontaneous alteration of a right circular motion of the suspended mass (11) or of a part of the latter, into a left circular motion and vice versa.

**4.** Gyro according to Claim 1, **characterized in that** it comprises a servocontrol using the signals from the position sensors (18, 19) and from the processing device (21 to 25) to control the displacement motor(s) (16, 17) in such a way as to keep the amplitudes of the right and left circular motions constant and equal.

**5.** Gyro according to Claim 1, **characterized in that** the two orthogonal natural modes of oscillation have a slight frequency offset causing, by beating, a periodic transformation of a right circular motion of the suspended mass (11) or of a part of the latter, into a left circular motion and vice versa, while passing through intermediate steps having linear motion.

**6.** Gyro according to Claim 5, **characterized in that** it comprises a servocontrol using the signals from the position sensors (18, 19) and from the processing device (21 to 25) to control the displacement motors (16, 17) in such a way as to keep the amplitudes of the right and left circular motions constant and equal.

**7.** Gyro according to Claim 6, **characterized in that** the servocontrol delivers excitation pulses to the displacement motors (16, 17) during the intermediate steps having linear motion of the suspended mass (11) or of a part of the latter.

**8.** Gyro according to Claim 6, **characterized in that** the servocontrol delivers excitation pulses to the displacement motors (16, 17) during the intermediate steps having linear motion of the suspended mass (11) or of a part of the latter, at the time that the suspended mass (11) or a part of the latter passes through the midpoint of its linear trajectory.

**9.** Gyro according to Claim 1, **characterized in that** the processing device (21 to 25) measures the frequency and/or the phase of each right or left circular motion on the basis of the signals provided by position sensors (18) responsive to one of the orthogonal natural modes of oscillation of the suspended mass (11) or of a part of the latter.

**10.** Gyro according to Claim 1, **characterized in that** the processing device comprises a circuit (21) for detecting lead and lag quadratures between those components of the signals from the position sensors that relate to one of the natural modes of oscillation and those components of the signals from the position sensors that relate to the other orthogonal natural mode of oscillation.

**11.** Gyro according to Claim 1, **characterized in that** the displacement motors (16, 17) and position sensors (18, 19) consist of one and the same device playing the two roles alternately.

**12.** Gyro according to Claim 1, **characterized in that** the displacement motors (16, 17) individually influence one of the orthogonal natural modes of oscillation and not the other and are split into two groups of equal importance, the displacement motors of one group acting on one of the natural modes of oscillation and those of the other group acting on the other natural mode of oscillation.

**13.** Gyro according to Claim 1, **characterized in that** the displacement motors (16, 17) and position sensors (18, 19) consist of one and the same device alternately playing the roles of motor and of position sensor, are arranged so as to influence one of the orthogonal modes and not the other, and are split into two groups depending on whether they act on one or the other of the two orthogonal modes of oscillation.

**14.** Gyro according to Claim 1, **characterized in that** the suspended mass (11) is fixed to the support by a set of elastic suspensions (12 to 15) allowing it to oscillate in a plane with natural modes of different frequencies along two orthogonal directions.

**15.** Gyro according to Claim 1, **characterized in that** the suspended mass (11) consists of two vibrating masses associated in such a way that their barycentre remains fixed.

16. Gyro according to Claim 1, **characterized in that** the suspended mass consists of two vibrating masses with fixed barycentre that are obtained through associations of beams and of bending points.

17. Gyro according to Claim 1, **characterized in that** the suspended mass is an annulus (30, 50) with two orthogonal natural bending modes oriented along axes 45° apart.

18. Gyro according to Claim 1, **characterized in that** the suspended mass is a cylinder with two orthogonal natural bending modes oriented along axes 45° apart.

19. Gyro according to Claim 1, **characterized in that** the suspended mass is a bowl whose edge presents with two orthogonal natural bending modes oriented along axes 45° apart.

20. Gyro according to Claim 1, **characterized in that** the displacement motors (16, 17) are piezoelectric devices.

21. Gyro according to Claim 1, **characterized in that** the position sensors (18, 19) are piezoelectric devices.

22. Gyro according to Claim 1, **characterized in that** the displacement motors are electrostatic devices.

23. Gyro according to Claim 1, **characterized in that** the position sensors (18, 19) are electrostatic devices.

FIG.1

FIG.2

FIG.3

FIG.4

FIG.5

FIG.6

FIG.7

FIG.8

FIG.9